# EUROPÄISCHE PATENTSCHRIFT

(11) **EP 3 161 175 B1**
(45) Veröffentlichungstag und Bekanntmachung des Hinweises auf die Patenterteilung: **22.08.2018**
(21) Anmeldenummer: 15731870.0
(22) Anmeldetag: 15.06.2015
(51) Int. Cl.: B22D 11/00, B32B 15/08, B32B 15/18, B32B 1/08, C22C 38/02, C22C 38/04, C22C 38/06, C22C 38/22, C22C 38/34, C22C 38/38, C21D 6/00, C21D 8/02, H01M 2/10, H01M 2/34

(54) **STAHLPRODUKT ZUM SCHUTZ ELEKTRISCHER BAUTEILE VOR MECHANISCHER BESCHÄDIGUNG**
STEEL PRODUCT FOR PROTECTING ELECTRICAL COMPONENTS FROM MECHANICAL DAMAGE
PRODUIT EN ACIER SERVANT À PROTÉGER DES COMPOSANTS ÉLECTRIQUES D'UNE DÉTÉRIORATION MÉCANIQUE

(30) Priorität: 25.06.2014 DE 102014009534
(43) Veröffentlichungstag der Anmeldung: 03.05.2017
(73) Patentinhaber: Salzgitter Flachstahl GmbH, 38239 Salzgitter (DE)
(72) Erfinder: BRAUN, Michael, 38165 Lehrte (DE); OTTO, Manuel, 38162 Cremlingen (DE); EVERTZ, Thomas, 31228 Peine (DE)
(74) Vertreter: Meissner, Peter E.
(86) Internationale Anmeldenummer: PCT/EP2015/063333
(87) Internationale Veröffentlichungsnummer: WO 2015/197412

(56) Entgegenhaltungen:
- EP-A1- 1 699 582
- WO-A1-95/26423
- DE-A1-102009 037 138
- DE-A1-102011 117 135
- FR-A1- 2 857 980
- US-A1- 2002 048 529

## Beschreibung

Die Erfindung betrifft ein Stahlprodukt zum Schutz elektrischer Bauteile vor mechanischer Beschädigung. Insbesondere betrifft die Erfindung die Verwendung eines solchen Stahlproduktes als Schutz für Crash gefährdete elektrische Anlagen und Bauteile in Kraftfahrzeugen gemäß Patentanspruch 1.
Crash gefährdete elektrische Bauteile können zum Beispiel im Kraftfahrzeug befindliche Energiespeicher wie Hochspannungsbatterien sein, wie sie für Elektrofahrzeuge Anwendung finden. Derartige Batterien sind in stabilen Kästen untergebracht, um sie bei Unfällen vor Beschädigung durch Deformation und einer daraus resultierenden möglichen Kurzschlussbildung mit umgebenden metallischen Fahrzeugteilen und damit vor Brandgefahr zu schützen. Desgleichen müssen auch elektrische Anlagen oder Bauteile mit Hochspannung vor Kurzschlüssen geschützt werden, um Folgeschäden durch einen Brand zu verhindern.
Durch das Amtsblatt der Europäischen Union (Regelung 94, Kapitel 5.2.8.2 Elektrolytaustritt) ist zudem die Vermeidung des Austretens von Batteriesäure geregelt.
Im Stand der Technik werden diverse Möglichkeiten offenbart, Batterien für Elektrofahrzeuge vor Deformation und Kurzschluss zu schützen.
Die Offenlegungsschrift DE 10 2010 006 514 A1 beschreibt die Notwendigkeit, den Batteriekasten/Batterieträger gegen Crashlasten abzusichern. Hier wird vorgesehen, durch eine Vorrichtung den Batteriekasten aus dem Kollisions-/Deformationsbereich zu schwenken und/oder zu verschieben. Die Realisierung dieser Maßnahme ist sehr aufwändig und teuer und mit Mehrgewicht für die notwendige Mechanik verbunden.
Aus der Offenlegungsschrift DE 10 2011 077 385 A1 ist eine Befestigungsstruktur für einen Fahrzeugbatteriekasten bekannt, die in der Lage ist, beim Einwirken einer Aufprallkraft von hinten (Heck-Crash) einen Kurzschluss der Batterie zu vermeiden. Dazu trennt die Befestigungsstruktur durch Verschiebung/Vorwärtsbewegung gezielt stromführende Teile und unterbricht den Stromkreislauf. Auch diese Maßnahme ist sehr aufwändig zu realisieren und bietet keinen sicheren Schutz, die Batterie selbst vor einem Kurzschluss mit elektrisch leitenden Bauteilen zu schützen.

In der Offenlegungsschrift DE 10 2012 004 135 A1 wird ein Batteriekasten für eine Traktionsbatterie beschrieben mit einem Gehäuse in Schalenbauweise mit Ober- und Unterschale aus Kunststoff wobei die Oberschale zum Zwecke der elektromagnetischen Abschirmung mit einer elektrisch leitenden Schicht versehen ist. Wahlweise können die Schalen zusätzlich auch innen mit einer elektrisch leitenden Schicht versehen sein. Ein Schutz vor möglichen Kurzschlüssen im Crashfall kann hiermit allerdings nicht bewirkt werden. Auch das Deformationsvermögen von Kunststoff im Crashfall ist sehr begrenzt, um die Batterie wirksam vor Beschädigung zu schützen Aus der Offenlegungsschrift DE 10 2009 037 138 A1 ist ebenfalls ein Gehäuse in Schalenbauweise bekannt, wobei hier die Unterschale aus zwei Bauteilen aufgebaut ist mit einer inneren Schale aus Kunststoff und einer äußeren Schale, die entweder aus Kunststoff oder Metall besteht und form- oder stoffschlüssig mit der Unterschale verbunden ist. Auch hier ist der mechanische und elektrische Schutz der Batterie noch nicht ausreichend gewährleistet.
*Aus der* DE 10 2011 117 135 A1 *ist ein Leichtbaustahl für Energie speichernde Behältnisse bekannt, der einen mit* 14 *bis 30% hohen Mangan Anteil aufweist. Ebenfalls ein hoher Mangananteil von* 15 *bis* 35% *ist bei der in der WO 95*/*26423 beschriebenen Stahlzusammensetzung offenbart.*

Aber gerade der stark umkämpfte Automobilmarkt zwingt die Hersteller ständig nach Lösungen zur Senkung des Flottenverbrauchs unter Beibehaltung eines höchstmöglichen Komforts und Insassenschutzes zu suchen. Dabei spielt gerade bei Elektrofahrzeugen neben der Leistungserhöhung der Batterien die Gewichtsersparnis aller Fahrzeugkomponenten eine entscheidende Rolle, um die Reichweite des Fahrzeugs zu erhöhen.
Zudem muss auch ein die passive Sicherheit der Passagiere förderndes Verhalten der einzelnen Bauteile bei hohen statischen und dynamischen Beanspruchungen im Betrieb und im Crashfall realisiert werden. Bei der passiven Sicherheit kommt dem Schutz der hochenergetischen Fahrzeugbatterie vor elektrischem Kurzschluss und daraus entstehender potentieller Brandgefahr deshalb eine besondere Bedeutung zu.

Mit den vorgenannten bekannten Maßnahmen kann jedoch ein ausreichender mechanischer Schutz des elektrischen Energiespeichersystems vor Deformation und elektrischem Kurzschluss in kostengünstiger und gewichtsparender Weise noch nicht realisiert werden.

Der Erfindung liegt deshalb die Aufgabe zugrunde ein Stahlprodukt zum Schutz elektrischer Bauteile vor mechanischer Beschädigung, insbesondere eines elektrischen Energiespeichersystems in Kraftfahrzeugen anzugeben, welches einerseits die Anforderungen an die Crashsicherheit und andererseits Schutz vor elektrischem Kurzschluss im Deformationsfall bietet. Desweiteren soll dieses Stahlprodukt gewichtssparend und günstig in der Herstellung sein.
Diese Aufgabe wird durch ein Stahlprodukt gemäß dem Patentanspruch 1 gelöst. Vorteilhafte Weiterbildungen sind Gegenstand von Unteransprüchen.

Die Lehre der Erfindung umfasst ein Stahlprodukt zum Schutz elektrischer Bauteile vor mechanischer Beschädigung und dadurch bedingtem elektrischem Kurzschluss, hergestellt aus einem Leichtbaustahl *bestehend aus* 6 bis 30 Gew.% Mangan, bis zu 12,0 Gew.-% Aluminium, bis zu 6,0 Gew.-% Silizium, 0,04 bis 2,0 Gew.-% Kohlenstoff sowie zusätzlich einem oder mehreren der Elemente von Chrom, Titan, Vanadium, Niob, Bor, Zirkon, Molybdän, Nickel, Kupfer, Wolfram, Kobald mit je bis zu 5 Gew.-% und in Summe bis zu 10 Gew.-%, Rest Eisen, *sowie erschmelzungsbedingten Verunreinigungen,* als Warmband oder kaltgewalztes Band, Blech oder Rohr, wobei das Stahlprodukt zumindest einseitig auf der später den elektrischen Bauteilen zugewandten Seite mit einer elektrisch nicht leitenden Kunststoff-Beschichtung versehen ist.
Hochmanganhaltige Stähle im Sinne der Erfindung zeichnen sich durch ein teilstabilisiertes γ-Mischkristall-Gefüge mit definierter Stapelfehlerenergie mit einem z.T. multiplen TRIP-Effekt auf, der die spannungs- oder dehnungsinduzierte Umwandlung eines flächenzentrierten γ-Mischkristalls (Austenit) in einen ε-Martensit (hexagonal dichteste Kugelpackung), der dann bei weiterer Verformung in einen raumzentrierten α-Martensit und Restaustenit transformiert. Der hohe Umformgrad wird durch TRIP- (Transformation Induced Plasticity) und TWIP- (Twinning Induced Plasticity) Eigenschaften des Stahles erreicht.
Zahlreiche Versuche haben gezeigt, dass im komplexen Zusammenspiel zwischen Al, Si und Mn dem Kohlenstoffgehalt eine überragende Bedeutung zukommt. Er erhöht zum einen die Stapelfehlerenergie und erweitert zum anderen den metastabilen Austenitbereich. Dadurch können die verformungsinduzierte Martensitbildung und die damit verbundene Verfestigung und auch die Duktilität in weiten Grenzen beeinflusst werden.
Durch Zugabe weiterer Legierungselemente wie Cr, Ti, V, Nb, B, Zr, Mo, Ni, Cu, W, Co, mit Gehalten je bis zu 5,0 Gew.-% und in Summe bis zu 10,0 Gew.-% können darüber hinaus werkstoffspezifische Eigenschaften gezielt eingestellt werden.
Beispielsweise bewirken neben einer erhöhten Zugabe von Al mit bis zu 12,0 Gew.-% eine Zugabe von Co, Mo oder V eine Erhöhung der Warmfestigkeit.

Eine höhere Warmfestigkeit ist beispielsweise bei hoher Temperaturbeanspruchung, wie z.B. bei einem Brand, von Vorteil, da die Integrität des Behältnisses länger aufrecht erhalten bleibt als bei bisher bekannten α'-Martensit enthaltenden TRIP-Stählen.

Besonders vorteilhafte Eigenschaften aus einer Kombination von hoher Festigkeit, Verformungsfähigkeit, Korrosionsbeständigkeit und Herstellbarkeit können erreicht werden, wenn der Stahl folgende chemische Zusammensetzung (in Gew.-%) aufweist:
Mn: 9 - 18
C: 0,07 - 1,0
Al: 0,04 - 4
Si: 0,04 - 4
Cr: 0,04 - 4

Als vorteilhaft bezüglich der Korrosionsbeständigkeit hat sich ein Mindestgehalt an Chrom von 2,0 Gew.-% und Maximalgehalt von 4,0 Gew.-% herausgestellt. Bei einer Zugabe von unter 2,0 Gew.-% zeigt Chrom keinen entscheidenden Einfluss auf die Korrosionsbeständigkeit. Es bildet sich ein Mischkristall und die für die Korrosionsbeständigkeit verantwortliche Chromoxidbeschichtung kann sich nicht bilden. Bei einer Chrom-Zugabe von über 4,0 Gew.-% kann sich nach einer langen Standzeit die spröde Sigma-Phase bilden. Mit einer Zugabe von Chrom in Gehalten von 0,12 bis <2,0 Gew.-% kann dagegen die Duktilität des erfindungsgemäßen Stahlproduktes erheblich gesteigert und Austenit in dem hochmanganhaltigen Stahl stabilisiert werden.

Besondere Eigenschaften hinsichtlich der Vergießbarkeit, Warmumformbarkeit und Kaltverformbarkeit sowie der Duktilität sind vorteilhaft einstellbar, wenn die Legierungselemente, Mo (0,2 - 1 Gew.-%), Cr (0,12-2 Gew.-%) und Mn (12-17 Gew.-%) in den Massenanteilen in der Kombination mit C (0,3-0,8 Gew.-%) eingestellt werden, wobei erfindungsgemäß ein austenitischer Zustand des Stahls noch sichergestellt ist. Die Gehalte an Al (1-3 Gew.-%) sowie Si (0,5-2,5 Gew.-%) sind im Hinblick auf eine optimale Vergießbarkeit und eine geringe Sensibilität gegenüber Wasserstoffversprödung des Stahls angepasst.

Weitere Verbesserungen der Werkstoffeigenschaften lassen sich erreichen durch gezielte Zugaben von Kupfer und/oder Chrom. Mit der Zugabe von Kupfer von mindestens 0,1, vorteilhaft mindestens 0,3 Gew.-% wird der ε-Martensit stabilisiert und die Verzinkbarkeit verbessert. Zudem erhöht Kupfer die Korrosionsbeständigkeit des Stahles. Auch Chrom stabilisiert den ε-Martensit und verbessert die Korrosionsbeständigkeit.

Die Erfindung verbindet damit das hervorragende Energieaufnahme- und Verfestigungsvermögen des Werkstoffs mit einer zuverlässigen elektrischen Isolierung zum Schutz vor Kurzschlüssen im Deformationsfall.

Um diesen Anforderungen zu genügen, sollte der Stahl eine Mindestdehngrenze von 500 MPa, eine Mindestzugfestigkeit Rm von 800 MPa und eine Mindestbruchdehnung A80 von 25 % aufweisen.

Durch sein sehr gutes Umformvermögen kann trotz hoher Festigkeit dieses Stahls, die Fertigung von komplexen Bauteilen, wie zum Beispiel Schutzkästen zum Schutz von elektrischen Energiespeichern, aus wenigen Einzelteilen realisiert werden, entgegen den heute üblichen Bauweisen (Einsatz von ebenen Platten, die aufwendig zusammengefügt (schweißen/schrauben) werden müssen).

Zusätzlich wird zumindest die dem Energiespeicher zugewandte Seite des Schutzkastens zur Verhinderung von Kurzschlüssen im Deformationsfall durch eine elektrisch isolierende Beschichtung geschützt, die nachträglich aufgetragen wird oder aber bevorzugt bereits vor der Umformung als Folie in einem kontinuierlichen Durchlaufverfahren auf das erzeugte Stahlband, z.B. mit bestehenden Bandbeschichtungsanlagen, aufgebracht wird.

Diese Schicht weist als Funktionsfolie z.B. sowohl ein korrosionsbeständiges Verhalten gegenüber Säure (z.B. gegen Akkumulatorensäure), als auch nichtleitende elektrische Eigenschaften auf. Die Dicke der Beschichtung kann abhängig von der Aufgabenstellung bezüglich der nichtleitenden und antikorrosiven Eigenschaften beispielsweise 0,05 bis 0,5 mm betragen und aus einem ein- oder mehrlagigen Aufbau bestehen.

Bei einem einlagigen Aufbau besteht die Beschichtung aus vorteilhaft aus Kunststoff. Mit einem mehrlagigen Aufbau der Beschichtung kann vorteilhaft unterschiedlichsten Anforderungen bezüglich der elektrischen Isolierung und Korrosionsbeständigkeit Rechnung getragen werden. Die Beschichtung kann beispielsweise aus einer Kunststoffschicht und einer metallischen Schicht, wie zum Beispiel einer Metallfolie bestehen, wobei die Dicke der einzelnen Schichten je nach Anforderung ebenfalls variieren können.

Die metallische Schale des Schutzkastens aus hochmanganhaltigem Stahl dient insbesondere dem mechanischen Schutz des Energiespeichers sowie der elektromagnetischen Abschirmung. Zudem weist der Werkstoff vorteilhaft paramagnetische Eigenschaften auf. Darüber hinaus wird eine Reduzierung des Bauteilgewichts durch die dichtereduzierende Legierungselemente Mangan, Aluminium und Silizium erreicht.

Das erfindungsgemäße Stahlprodukt kommt somit einer Funktionsintegration gleich. Es bietet Schutz vor übermäßiger Deformation durch Crash und damit verursachtem Kurzschluss sowie vor elektromagnetischen Effekten, und elektromagnetischer Verträglichkeit.

Die Vorteile der Erfindung liegen somit in einer Verbesserung des Schutzes gegen die Beschädigung von Akkumulatoren im Fall einer Deformation des Fahrzeugs bzw. des Energiespeichers und unkontrollierbaren Kurzschlüssen sowie der Vermeidung der Gefahr durch Brand oder Explosion oder Austreten von Flüssigkeiten aus dem Akkumulator.

Gleichzeitig wird ein verringertes Bauteilgewicht erreicht, aufgrund der Reduzierung der Dichte des hochmanganhaltigen Stahls. Außerdem wird eine Fertigung sehr komplexer nicht flächiger Bauteile durch Umformen aus einem oder wenigen Blechen oder Rohren ermöglicht und damit eine höhere gestalterische Freiheit bei der Konstruktion und der Integration des Akkumulators in die Karosserie. Zudem werden Umformmöglichkeiten bei Verwendung des hochmanganhaltigen Stahls realisiert, die erst eine Konstruktion in Stahl erlauben.

Allgemein wird bei der Herstellung von Stahlblech als Halbzeug der flüssige Stahl kontinuierlich zu Brammen mit 50 - 400 mm Dicke vergossen und anschließend auf das erforderliche Endmaß, in der Regel etwa 2 - 5 mm, gewalzt. Neben der Energie für das Walzen ist weitere Energie für das Wiedererwärmen des Stahls in Öfen zwischen den Prozessschritten erforderlich.

Bei der konventionellen Herstellung des erfindungsgemäßen Stahls mittels Brammenstranggießtechnologie gibt es allerdings erhebliche Probleme qualitativ hochwertige Stahlbleche zu erzeugen. Gründe dafür sind im Wesentlichen Entmischungen der Legierungselemente (Makroseigerung), Bildung von Hohlräumen während der Erstarrung (Lunker), Grobkornbildung sowie die massive Gießpulverkontamination durch die hohen Al-Gehalte.

Als besonders vorteilhaft hat sich für den erfindungsgemäßen Leichtbaustahl die Erzeugung mittels Bandgießtechnologie herausgestellt, die beispielsweise aus der EP 1 699 582 B1 bekannt ist. Die Herstellung des Leichtbaustahls für das erfindungsgemäße Stahlprodukt wird durch eine grundlegend geänderte Bandgießtechnologie ermöglicht, bei der der flüssige Stahl direkt in Dicken von 6 bis 15 mm auf ein horizontal mit Gießgeschwindigkeit laufendes Spezialband vergossen und anschließend gewalzt wird. Durch die geringe Gießdicke sind deutlich kürzere Zeitintervalle zur Einstellung der Temperaturverteilung vor dem direkt angeschlossenen Inline-Walzprozess erforderlich.

Neben Bändern als Halbzeug lassen aus den so erzeugten Bändern auch vorteilhaft Rohre durch Einformung und anschließendem Schweißen herstellen, die anschließend mit einer nichtleitenden Beschichtung versehen werden, die ebenfalls ein- oder mehrlagig ausgeführt sein kann.

Aus den so hergestellten Stahlprodukten werden anschließend die Bauteile zum Schutz vor mechanischen Beschädigungen für elektrische Energiespeichersysteme, elektrischen Anlagen oder Geräte hergestellt. Dies können zum Beispiel Gehäuse, Behälter oder Käfige aus Blech und/oder Rohren sein.

Neben der Herstellung durch Bandgießen lässt sich die erfindungsgemäße Stahllegierung auch vorteilhaft als Gusswerkstoff, beispielsweise für Bauteile mit sehr komplexer Geometrie, die nicht durch Umformen hergestellt werden können, einsetzen.

Der Vorteil des vorgeschlagenen Leichtbaustahles für das erfindungsgemäße Stahlprodukt ist darin zu sehen, dass durch gezielte Legierungszusammensetzung und Wahl der Prozessparameter wie Umformgrad und Wärmebehandlung ein breites Spektrum von Festigkeits- und Duktilitätsanforderungen abgedeckt werden kann, wobei Zugfestigkeiten bis 1400 MPa möglich sind.

Wenngleich die Erfindung insbesondere für die Einkapselung von hochenergetischen Fahrzeugbatterien geeignet ist, ist der dafür verwendete Leichtbaustahl jedoch nicht hierauf beschränkt sondern selbstverständlich überall dort einsetzbar, wo elektrische Anlagen und Bauteile vor mechanischer Beschädigung geschützt und elektrische Kurzschlüsse und damit verbundene Gefahren verhindert werden müssen.
Dies können zum Beispiel Einsatzbereiche im Maschinen- oder Kraftwerksbau oder Wehrtechnik sein.

Auch können die erfindungsgemäßen Stahlprodukte ortsstabile, d.h. fest installierte Schutzkonstruktionen wie Behältnisse, Kästen, Käfige etc. sein, ebenso wie entsprechende transportable Schutzkonstruktionen.

Das erfindungsgemäße Stahlprodukt kann dabei mehrere Schutzfunktionen erfüllen.
Die Schutzfunktion kann sich zum Beispiel bei Batteriekästen auf den Schutz der Batterie vor mechanischer Beschädigung und elektrischem Kurzschluss, als auch auf den Schutz vor aus der Batterie auslaufenden Flüssigkeiten, wie Batteriesäure beziehen. In diesem Fall ist das Stahlprodukt als flüssigkeitsdichtes Gehäuse ausgeführt.

## Patentansprüche

1. Stahlprodukt zum Schutz elektrischer Bauteile vor mechanischer Beschädigung und dadurch bedingtem elektrischem Kurzschluss, hergestellt aus einem Leichtbaustahl *bestehend aus* 6 bis 30 Gew.% Mangan, bis zu 12,0 Gew.% Aluminium, bis zu 6,0 Gew.% Silizium, 0,04 bis 2,0 Gew.% Kohlenstoff sowie zusätzlich einem oder mehreren der Elemente von Chrom, Titan, Vanadium, Niob, Bor, Zirkon, Molybdän, Nickel, Kupfer, Wolfram, Kobald mit je bis zu 5,0 Gew.% und in Summe bis zu 10,0 Gew.%, Rest Eisen, sowie erschmelzungsbedingte Verunreinigungen, als Warmband oder kaltgewalztes Band, Blech oder Rohr, wobei das Stahlprodukt zumindest einseitig auf der später den elektrischen Bauteilen zugewandten Seite mit einer elektrisch nicht leitenden Kunststoff-Beschichtung versehen ist.

2. Stahlprodukt nach Anspruch 1 mit folgender chemischen Zusammensetzung (in Gew. %):
Mn: 9 - 18
C: 0,07 - 1,0
Al: 0,04 - 4
Si: 0,04 - 4
Cr: 0,04 - 4

3. Stahlprodukt nach Anspruch 1 und 2 mit folgender chemischen Zusammensetzung (in Gew.%):
Mn:12 - 17
C: 0,3 - 0,8
Al: 1 - 3
Si: 0,5 - 2,5
Cr: 0,12 - < 2
Mo: 0,2-1

4. Stahlprodukt nach den Ansprüchen 1 bis 3 mit einer Mindestdehngrenze von 500 MPa, einer Mindestzugfestigkeit Rm von 800 MPa und einer Mindestbruchdehnung A80 von mindestens 25 %.

5. Stahlprodukt nach den Ansprüchen 1 bis 4,
**dadurch gekennzeichnet,**
**dass** die elektrisch isolierende Kunststoff-Beschichtung ein- oder mehrlagig ausgeführt ist.

6. Stahlprodukt nach Anspruch 5,
**dadurch gekennzeichnet,**
**dass** die mehrlagige Beschichtung aus einer Lage Kunststoff und einer Lage Metall besteht.

7. Stahlprodukt nach Anspruch 5 und 6,
**dadurch gekennzeichnet,**
**dass** die Beschichtung eine im kontinuierlichen Durchlaufverfahren auf das Band aufgebrachte Beschichtung ist.

8. Stahlprodukt nach einem der Ansprüche 1 bis 7,
**dadurch gekennzeichnet,**
**dass** die Beschichtung säurebeständig ist.

9. Stahlprodukt nach Anspruch 8,
**dadurch gekennzeichnet,**
**dass** die Beschichtung gegen Akkumulatorsäure beständig ist

10. Stahlprodukt nach einem der Ansprüche 1 bis 9,
hergestellt durch ein Vergießen einer Stahlschmelze in einer horizontalen Bandgießanlage in einer Dicke von 6 bis 15 mm, anschließendem Walzen zu einem Warm- oder Kaltband und anschließender Beschichtung mit einer nichtleitenden ein- oder mehrlagigen Beschichtung in einer kontinuierlich durchlaufenden Bandbeschichtungsanlage.

11. Stahlprodukt nach einem der Ansprüche 1 bis 10,
hergestellt durch ein Vergießen einer Stahlschmelze in einer horizontalen Bandgießanlage in einer Dicke von 6 bis 15 mm, anschließendem Walzen zu einem Warm-oder Kaltband, Einformung des Bandes zu einem Schlitzrohr und Schweißen zu einem Rohr und Beschichtung des Rohres mit einer nichtleitenden ein- oder mehrlagigen Beschichtung.

12. Verwendung eines Stahlproduktes nach einem der Ansprüche 1 bis 11 zur Herstellung von Bauteilen zum Schutz vor mechanischen Beschädigungen für elektrische Energiespeichersysteme, elektrischen Anlagen oder Geräte.

13. Verwendung von Bauteilen nach Anspruch 12 zur Herstellung von Gehäusen, Behältern oder Käfigen aus Blech und/oder Rohren.

## Claims

1. A steel product for protection of electrical components against mechanical damage and electrical short circuits resulting therefrom, said steel product being produced from a lightweight steel *consisting of* 6 to 30 wt.% manganese, up to 12.0 wt.% aluminium, up to 6.0 wt.% silicon, 0.04 to 2.0 wt.% carbon and additionally one or more of the elements chromium, titanium, vanadium, niobium, boron, zirconium, molybdenum, nickel, copper, tungsten, cobalt with up to 5 wt.% of each and up to 10 wt.% in total, remainder iron including impurities resulting from smelting, as hot-rolled strip or cold-rolled strip, sheet or tube, wherein the steel product is provided on at least one side with an electrically non-conductive plastic coating on the side which later faces the electrical components.

2. The steel product according to claim 1, having the following chemical composition (in wt.%):
Mn: 9 - 18
C: 0.07 - 1.0
Al: 0.04 - 4
Si: 0.04 - 4
Cr: 0.04 - 4.

3. The steel product according to claims 1 and 2, having the following chemical composition (in wt.%):
Mn: 12 - 17
C: 0.3 - 0.8
Al: 1 - 3
Si: 0.5 - 2.5
Cr: 0.12 - <2
Mo: 0.2 - 1.

4. The steel product according to claims 1 to 3, having a minimum offset yield strength of 500 MPa, a minimum tensile strength Rm of 800 MPa and a minimum elongation at fracture A80 of at least 25%.

5. The steel product according to claims 1 to 4,
**characterised in that**
the electrically insulating plastic coating is in single-layered or multi-layered form.

6. The steel product according to claim 5,
**characterised in that**
the multi-layered coating consists of a layer of plastic and a layer of metal.

7. The steel product according to claims 5 and 6,
**characterised in that**
the coating is a coating which is applied on to the strip in a continuous process.

8. The steel product according to one of claims 1 to 7,
**characterised in that**
the coating is acid-resistant.

9. The steel product according to claim 8,
**characterised in that**
the coating is resistant to battery acid.

10. The steel product according to one of claims 1 to 9,
produced by casting a steel melt in a thickness of 6 to 15 mm on a horizontal strip-casting line, subsequently rolling into a hot- or cold-rolled strip and subsequently coating with a non-conductive single-layered or multi-layered coating on a continuous strip-coating line.

11. The steel product according to one of claims 1 to 10,
produced by casting a steel melt in a thickness of 6 to 15 mm on a horizontal strip-casting line, subsequently rolling into a hot- or cold-rolled strip, forming the strip into an open-seam tube and welding into a tube and coating the tube with a non-conductive single-layered or multi-layered coating.

12. Use of a steel product according to one of claims 1 to 11 for the production of components for protection against mechanical damage for electrical energy storage systems, electrical systems or devices.

13. The use of components according to claim 12 for producing housings, containers or cages made of sheet and/or tubes.

## Revendications

1. Produit en acier servant à protéger des composants électriques d'une détérioration mécanique et d'un court-circuit électrique en découlant, fabriqué à partir d'un acier de construction léger présentant 6 à 30 % en poids de manganèse, jusqu'à 12,0 % en poids d'aluminium, jusqu'à 6,0 % en poids de silicium, 0,04 à 2,0 % en poids de carbone et en plus à partir d'un ou plusieurs des éléments parmi le chrome, le titane, le vanadium, le niobium, le bore, le zircon, le molybdène, le nickel, le cuivre, le tungstène, le cobalt avec respectivement jusqu'à 5,0 % en poids et au total jusqu'à 10,0 % en poids, le reste étant du fer, ainsi que des impuretés dues à la fonte, en tant que feuillard à chaud ou feuillard laminé à froid, tôle ou tube, dans lequel le produit en acier est pourvu au moins unilatéralement sur la face tournée ultérieurement vers les composants électriques d'un revêtement en plastique électriquement non conducteur.

2. Produit en acier selon la revendication 1 avec la composition chimique suivante (en % en poids) :
Mn : 9 - 18
C : 0,07 - 1,0
Al : 0,04 - 4
Si : 0,04 - 4
Cr : 0,04 - 4.

3. Produit en acier selon la revendication 1 et 2 avec la composition chimique suivante (en % en poids) :
Mn : 12 - 17
C : 0,3 - 0,8
Al : 1 - 3
Si : 0,5 - 2,5
Cr : 0,12 - < 2
Mo : 0,2 - 1.

4. Produit en acier selon les revendications 1 à 3 avec une limite d'élasticité minimum de 500 MPa, une résistance à la traction minimum Rm de 800 MPa et un allongement de rupture minimum A80 d'au moins 25 %.

5. Produit en acier selon les revendications 1 à 4,
**caractérisé en ce**
**que** le revêtement en plastique électriquement isolant est réalisé on une ou plusieurs couches.

6. Produit en acier selon la revendication 5,
**caractérisé en ce**
**que** le revêtement à plusieurs couches se compose d'une couche en plastique et d'une couche en métal.

7. Produit en acier selon la revendication 5 et 6,
**caractérisé en ce**
**que** le revêtement est un revêtement appliqué selon le procédé de passage continu sur le feuillard.

8. Produit en acier selon l'une quelconque des revendications 1 à 7,
**caractérisé en ce**
**que** le revêtement est résistant à l'acide.

9. Produit en acier selon la revendication 8,
**caractérisé en ce**
**que** le revêtement est résistant à l'acide d'accumulateur.

10. Produit en acier selon l'une quelconque des revendications 1 à 9,
fabriqué par un coulage d'acier fondu dans une installation de coulée de feuillard horizontale sur une épaisseur de 6 à 15 mm, laminage subséquent en un feuillard à chaud ou froid et revêtement subséquent avec un revêtement à une ou plusieurs couches non conducteur dans une installation de revêtement de feuillard à passage continu.

11. Produit en acier selon l'une quelconque des revendications 1 à 10,
fabriqué par un coulage d'acier fondu dans une installation de coulée de feuillard horizontale sur une épaisseur de 6 à 15 mm, laminage subséquent en un feuillard à chaud ou froid, moulage du feuillard en un tube fendu et soudage en un tube et revêtement du tube avec un revêtement à une ou plusieurs couches non conducteur.

12. Utilisation d'un produit en acier selon l'une quelconque des revendications 1 à 11 pour la fabrication de composants servant de protection contre des détériorations mécaniques pour des systèmes de stockage d'énergie électriques, des installations ou appareils électriques.

13. Utilisation de composants selon la revendication 12 pour la fabrication de boîtiers, récipients ou cages en tôle et/ou tubes.
